# EUROPEAN PATENT APPLICATION

(11) **EP 4 238 704 A1**
(43) Date of publication of application: **06.09.2023**
(21) Application number: 20959654.3
(22) Date of filing: 28.10.2020
(51) Int. Cl.: B25H 1/04, B23D 47/02, B23Q 11/12, B28D 1/04

(54) **FRAME FOR MACHINES FOR CUTTING CERAMIC PIECES**

(71) Applicant: Germans Boada, S.A., 08191 Rubi (Barcelona) (ES)
(72) Inventor: BORRÀS MARQUÈS, Cristina, 08191 RUBI (Barcelona) (ES)
(74) Representative: Maldonado Jordan, Julia
(86) International application number: PCT/ES2020/070661
(87) International publication number: WO 2022/090583

(57) **Abstract**

Disclosed is a frame for machines for cutting ceramic pieces, which comprises a support structure of a guide (G) for longitudinally moving a cutting head (C), which comprises: a central aluminium beam (1) and two lateral aluminium beams (2a, 2b), the beams having a tubular cross-section and being parallel and connected at opposite ends by means of respective steel end plates (3a, 3b); a detachable table formed by two aluminum profiles (4a, 4b) mounted on the central beam (1) and the lateral beams (2a, 2b); and steel corner pieces (5) attached to the support structure, there being mounted to the corner pieces respective pairs of foldable legs (6) provided with locking means (9) for locking in an unfolded position, respective reinforcing cross beams (10) for carrying shock-absorbing elements (11) and rear wheels (12) for transporting in a folded position.

## Description

### Technical field.

The present invention relates to a frame for machines for cutting ceramic pieces, such as tiles or other similar pieces intended for construction, and which is provided with a triple aluminum beam and a quick folding system. This frame is torsionally designed and weight-optimised in order to increase its stability and stiffness, achieve greater durability and a better stiffness to lightness ratio, which contributes to the ease of use and transport by the user.

### Prior art

Machines for cutting tiles or other similar ceramic pieces used in the construction sector are currently widely known.

Among such machines for cutting, those that have a frame, mounted on foldable legs and serving as support for a detachable table for supporting the pieces to be cut and guide means for the longitudinal movement of a cutting head for cutting the ceramic pieces.

The frames used are made of sheets of ferrous material conveniently folded and welded, forming a type of bucket for collecting the water spilled on the cutting area during the operation of the machine for cutting.

This frame has the drawback that it has a high weight due to the structure and the material used in its manufacture, and it has the drawback that it deteriorates relatively quickly due to corrosion caused by contact with water.

It is common for this type of frame to have foldable legs, for example in the form of scissor legs, to reduce the space required for transport; however, the folding and unfolding of these legs by a single operator can be complicated due to the weight of the frame and the difficulty of handling same.

An additional problem in this type of frame, determined in part by its weight and by the stresses produced during cutting operations, is the appearance of clearances in the coupling area or in the area of the legs, the frame, which reduces stiffness and stability of the assembly.

Therefore, the technical problem that is considered is the development of a frame for machines for cutting ceramic pieces that allows solving the previously mentioned drawbacks.

### Description of the invention

According to the invention, unlike the existing types of frames on the market, the frame of the invention has a structure comprising a central beam and two lateral beams, the beams having a tubular section, made of aluminum and connected at their ends by means of two steel end plates.

These elements are connected by means of a set of pins that reduce play and improve the stiffness and assembly of the frame.

The construction of the frame allows the stiffness to increase so that the vibrations caused by the motor and the cutting forces are not transferred to the table of the frame. The movement of the piece is avoided and therefore a better finish and cutting precision are achieved.

The increased stiffness prevents the frame from twisting when the machine is working on an uneven surface, allowing consistent mitre cutting.

The importance of the central beam is the new distribution of loads allowing the rotation shaft of the head to be coaxial on both sides of the machine, which is very important for mitre cutting.

Likewise, the frame incorporates steel corner pieces for the assembly of foldable legs by means of respective rotation shafts, reinforcing and stiffening crossbars for reinforcing and stiffening the structure, and a pair of rear wheels for transporting the frame with the legs in the folded position.

In order to facilitate transport in this position, with the legs folded, the frame has a gripping handle on the front end plate.

In addition to contributing to increasing the lateral stiffness of the assembly of the frame, while maintaining its lightness, the mentioned reinforcing crossbars serve to fix some absorbing elements, so that the possible shocks that the frame may receive during transport or handling do not end up compromising the reliability of the rest of the components.

According to the invention, the mentioned corner pieces are screwed to threaded handrails housed in the corresponding lateral beams.

To improve the collection of water and prevent wear due to corrosion of the structure, the frame has a removable water tank, located interiorly at one of the ends of the frame. The water used is collected and conveyed into the tank by means of individual inclined trays, one on each side of the central beam, which open into the tank.

Therefore, the main features of the frame of the invention are: the use of aluminum profiles optimised in terms of weight/mechanical performance; an optimised and torsionally designed frame; removable and weight-optimised tables; the use of an external tank that prevents deterioration of the frame due to permanent contact with water; a system of foldable legs that can be easily handled by a single operator and that guarantees the stability of the assembly in the locked position, and the incorporation of a transport handle.

According to the invention, the locking means for locking the legs in the unfolded or use position advantageously comprise a lever lock made up of a bracket articulated on an actuation lever attached to the corresponding leg by means of a rotation shaft, and a hook defined in the respective corner piece for the hooking of the bracket in the locked position of the unfolded leg.

So that the legs can be folded without the bracket and the lever being able to describe relative movements, said actuation lever comprises in an intermediate area retention means for retaining the bracket when said locking means are not operative.

Advantageously, said retention means for retaining the bracket in the inoperative position with respect to the actuation lever consist of a magnet attached to said lever in a position coinciding with the end of the bracket, when the latter is arranged lowered onto the lever.

With the features described above, the folding system provides different advantages, among which the following should be noted: ease of folding, assembly by a single person, improved stability and its reliability and safety.

In order to improve the stability of the machine during use, at least one of the legs has a height-adjustable foot at its lower end, which makes it possible to achieve effective support of the four legs with the floor, even on uneven floors, and prevent the instability of the machine for cutting.

### Brief description of the contents of the drawings.

As a complement to the description provided herein, and for the purpose of helping to make the features of the invention more readily understandable, the present specification is accompanied by a set of drawings which, by way of illustration and not limitation, represent the following:
- Figure 1 shows a perspective view of an exemplary embodiment of the frame for machines for cutting ceramics according to the invention, in a use position, with a tile cutter mounted on the frame.
- Figure 2 shows a perspective view of the frame of the invention, without the cutter and with the legs in the folded position.
- Figure 3 shows a perspective view of the frame of the invention with the legs in the folded position.
- Figure 4 shows a partial view of the frame of Figure 3, along a vertical plane.
- Figure 5 shows a vertical section of one of the lateral beams of the frame, seen from one of its ends and in which the assembly of a corner piece can be seen on a threaded handrail housed inside said lateral beam.
- Figure 6 shows an elevational view of the front end of the frame sectioned by a vertical plane and an enlarged detail of one of the pins for connecting the corresponding steel end plate with the corresponding end of the beams.
- Figure 7 shows a schematic elevational view of the locking means for locking one of the legs, in the operative position, with the leg unfolded and the bracket attached to the corresponding hook.
- Figure 8 shows a view similar to Figure 7 with the locking means for locking one of the legs in an inoperative position, with the leg unfolded and with the bracket released from the corresponding hook, lowered onto the lever and attached to same by means of a magnet.
- Figure 9 shows a schematic elevational view of the locking means for locking one of the legs in the inoperative position and with the leg lowered in a horizontal position.
- Figure 10 shows a schematic bottom perspective view of the rear end of the frame.

### Detailed description of embodiments of the invention.

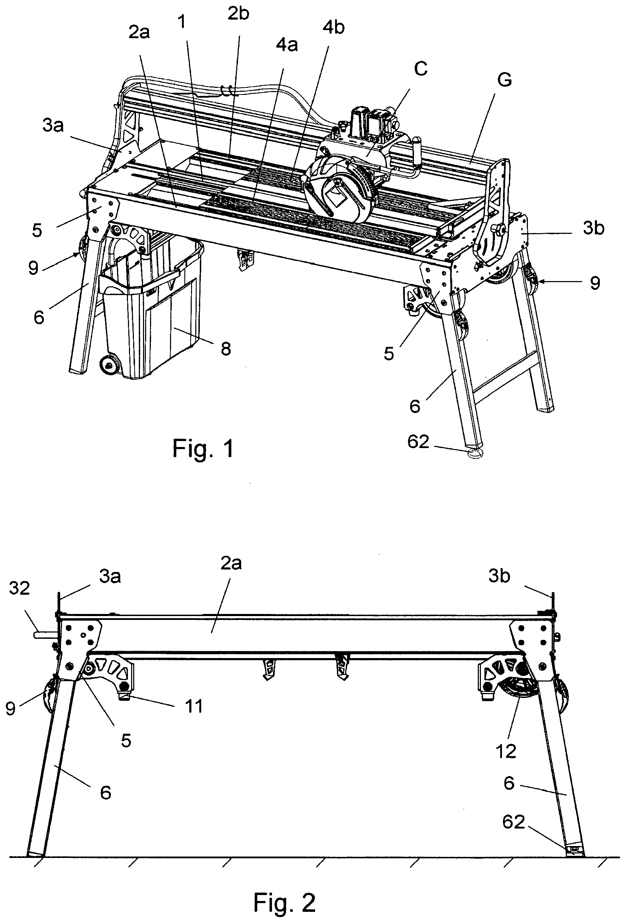

In the embodiment of Figure 1, a guide (G) for longitudinally moving a cutting head (C) for cutting tiles or pieces for construction in general has been depicted on the frame of the invention.

The frame comprises a structure formed by a central beam (1) and two lateral beams (2a, 2b), all of the beams being made of aluminum and having a tubular section, spaced in the transverse direction and connected at opposite ends by means of, respectively, two front and rear steel end plates (3a, 3b).

The frame comprises a detachable table formed by two aluminum profiles (4a, 4b), each provided with coplanar upper surfaces for supporting the pieces or tiles to be cut.

Said profiles (4a, 4b) are mounted with their lateral ends on the central beam (1) and on the corresponding lateral beam (2a, 2b) of the structure, superiorly closing a part of the gaps defined between said beams (1, 2a, 2b) of the frame.

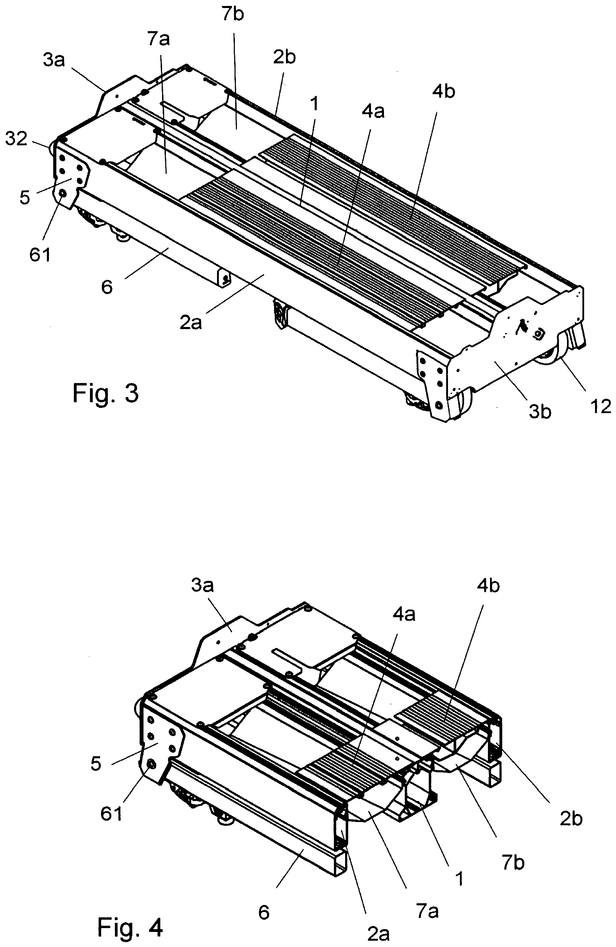

The frame comprises steel corner pieces (5), attached to the support structure, there being mounted to the corner pieces by means of respective rotation shafts (61) foldable legs (6) folding between an operative position, as shown in Figures 1 and 2, and an inoperative position, shown in Figure 3.

One of the legs (6) comprises a height-adjustable foot (62) at its lower end, which allows the total height of said leg (6) to be changed, in order to achieve effective support of the four legs on the floor, even on uneven ground, which allows leveling and guaranteeing the stability of the machine during its use.

In Figure 4, the tubular sections of the central beam (1a) and lateral beams (2a, 2b) beams of the structure and the sections of the profiles (4, 4b) that make up the surface of the table can be observed.

In said Figure 4, individual trays (7a, 7b) for collecting water, located in the longitudinal gaps of the frame, one on each side of the central beam (1), can also be observed. Said trays (7a, 7b) have a slight inclination in the longitudinal direction and open into a removable water tank (8), located interiorly at one of the ends of the frame and shown in Figure 1.

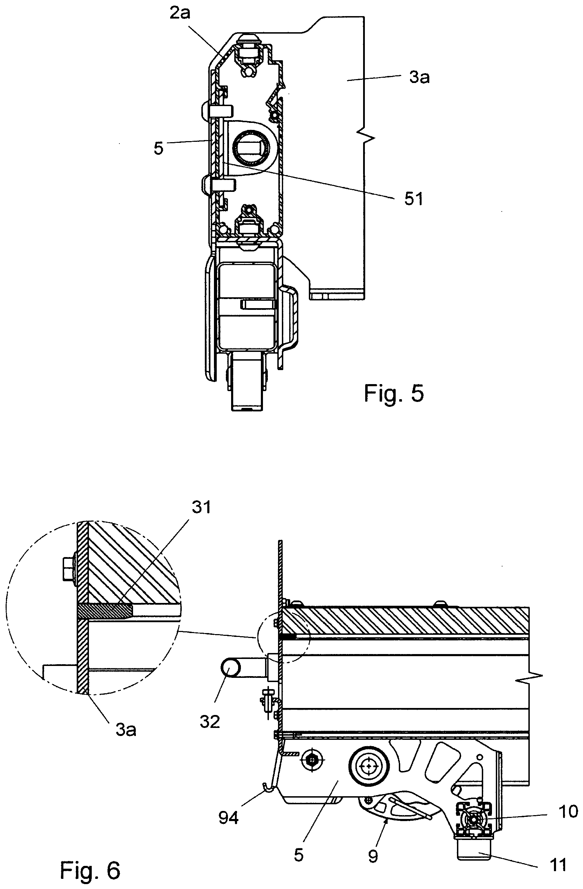

As shown in Figure 5, the corner pieces (5) are screwed to threaded handrails (51) housed in the corresponding lateral beams (2a, 2b).

Figure 6 depicts the connection of one of the end plates (3a, 3b), in this case the front one, to the corresponding end of the beams (1, 2a, 2b).

In said connection, in addition to the corresponding screws (not referenced), there are adjustment pins (31) that reduce play in the pieces and increase the stiffness of the connection.

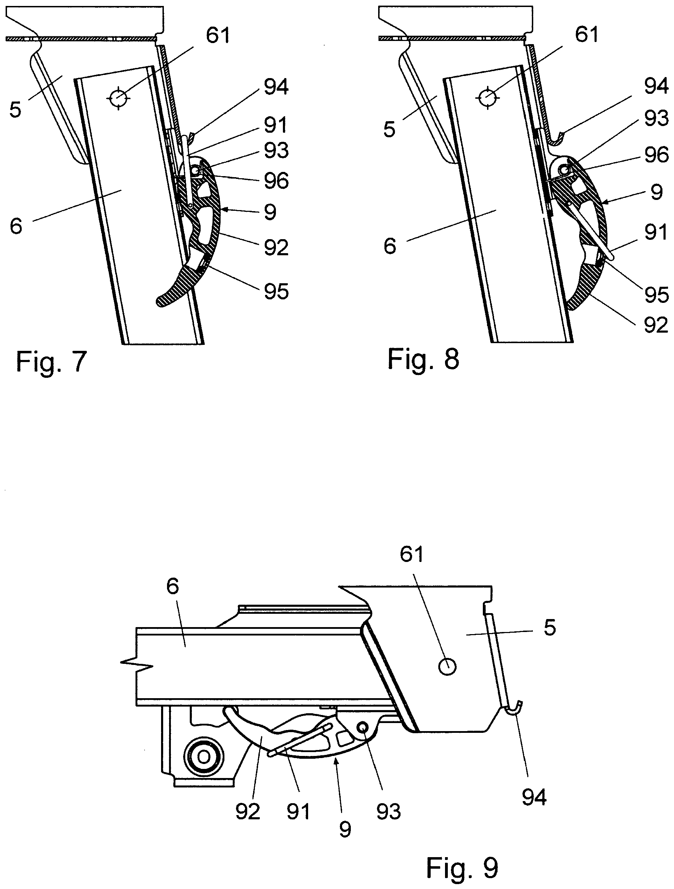

Figures 7, 8 and 9 show the locking means for locking the legs (6) with respect to the frame, made up in this example of a lever lock (9) comprising a bracket (91) articulated on an actuation lever (92) attached to the corresponding leg (6) by means of a rotation shaft (93), and a hook (94) defined in the respective corner piece (5).

Specifically in Figure 7, one of the legs (6) has been shown unfolded in an operative position and attached in said position by the lever lock (9), with the bracket (91) attached to the hook (94).

In Figure 8, the lever lock (9) is depicted as unlocked, with the bracket (91) released on the hook (94) and lowered onto the actuation lever (92), and the leg (6) in the unfolded position. Once the lock is unlocked, the leg (6) can then be folded down towards the inoperative horizontal position shown in Figure 9.

As shown in Figures 7 and 8, the actuation lever (92) comprises in an intermediate area retention means, represented in this case by a magnet (95), for holding the bracket (91) in an inoperative position and lowered onto said actuation lever (92).

Mounted on the rotation shaft (93) there is a torsion spring (96) which tends to lower the actuation lever (92) against the corresponding leg (6), preventing said actuation lever from swinging uncontrollably when the lock is unlocked and from remaining hanging when the legs (6) are in the folded position shown in Figures 3 and 9.

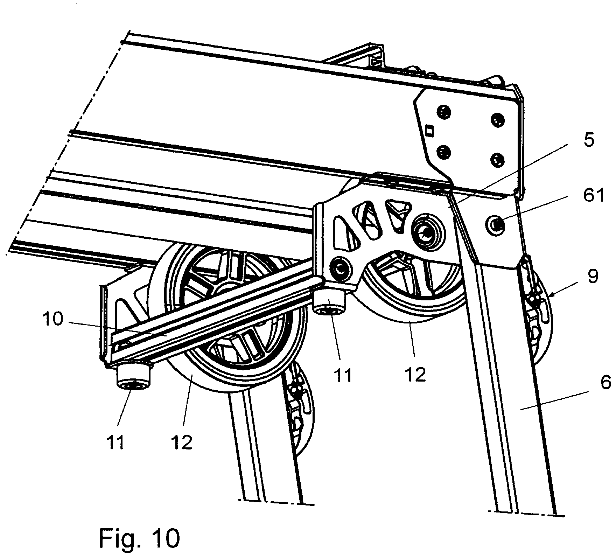

In the corner pieces (5) corresponding to the front and rear ends of the frame, there are mounted reinforcing and stiffening crossbars (10) for reinforcing and stiffening the structure, similar to the one shown in Figure 10, located transversally below the beams (1, 2a, 2b) for carrying shock-absorbing elements (11).

In the corner pieces (5) of the rear end of the frame, depicted in said Figure 10, there is also mounted a pair of rear wheels (12) for transporting the frame with the legs (6) in the folded position, gripping the frame by means of a handle (32) attached to the front end plate (3a) and visible in Figures 2 and 6.

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

## Claims

1. A frame for machines for cutting ceramic pieces, which comprises a support structure of a guide (G) for longitudinally moving a cutting head (C), and foldable legs (6), **characterised in that** it comprises:
- a central aluminium beam (1) and two lateral aluminium beams (2a, 2b), the beams having a tubular cross-section and being parallel and connected at opposite ends by means of respective steel end plates (3a, 3b), defining longitudinal gaps between said beams and end plates in the support structure
- a detachable table formed by two aluminium profiles (4a, 4b), provided with respective coplanar upper surfaces for supporting the tiles to be cut, said profiles (4a, 4b) being mounted at their lateral ends on the central beam (1) and on the corresponding lateral beam (2a, 2b), superiorly closing at least part of the longitudinal gaps of the support structure;
- steel corner pieces (5) attached to the support structure, there being mounted to the corner pieces:
- respective pairs of foldable legs (6) provided with locking means (9) with respect to said corner pieces (5) in an unfolded position, and
- a pair of rear wheels (12) for transporting the frame with the legs (6) in the folded position.

2. The frame, according to claim 1, **characterised in that** it comprises reinforcing and stiffening crossbars (10) for reinforcing and stiffening the structure, attached at their ends to the corner pieces (5) of the front and rear ends of the frame, located transversely below the beams (1, 2a, 2b) for carrying shock-absorbing elements (11).

3. The frame, according to any one of the preceding claims, **characterised in that** the corner pieces (5) are screwed to threaded handrails (51) housed in the corresponding lateral beams (2a, 2b).

4. The frame, according to any one of the preceding claims, **characterised in that** the connection of the end plates (3a, 3b) with the ends of the beams (1, 2a, 2b) of the structure comprises adjustment pins (31) that reduce play and increase the stiffness of the connection.

5. The frame, according to any one of the preceding claims, **characterised in that** it comprises a removable water tank (8) located interiorly at one of the ends of the frame and trays (7a, 7b) for collecting water, located in the longitudinal gaps of the frame, one on each side of the central beam, with an inclination in the longitudinal direction and which open onto the removable tank (8).

6. The frame, according to any one of the preceding claims, **characterised in that** the locking means for locking the legs in the unfolded position comprise a lever lock (9) provided with a bracket (91) articulated on an actuation lever (92) attached to the corresponding leg (6) by means of a rotation shaft (93), and a hook (94) defined in the respective corner piece (5).

7. The frame, according to claim 6, **characterised in that** the actuation lever (92) of the lever lock (9) comprises in an intermediate area retention means for retaining the bracket (91) on the lever in an inoperative position.

8. The frame, according to claim 7, **characterised in that** the retention means for retaining the bracket (91) in the inoperative position consist of a magnet (95) attached to the actuation lever (92).

9. The frame, according to any one of claims 6 to 8, **characterised in that** it comprises a torsion spring (96) mounted on the rotation shaft (93) of the actuation lever and which tends to lower the actuation lever (92) against the corresponding leg (6), preventing its rocking when the lever lock (9) is unlocked.

10. The frame, according to any one of the preceding claims, **characterised in that** it comprises at its front end a handle (32) for gripping and transporting the frame supported on wheels (12) and with the legs (6) in the folded position.

11. The frame, according to any one of the previous claims, **characterised in that** at least one of the legs (6) comprises a height-adjustable foot (62) at its lower end.
